# EUROPEAN PATENT SPECIFICATION

(11) **EP 1 324 196 B1**
(45) Date of publication and mention of the grant of the patent: **08.08.2007**
(21) Application number: 02028166.3
(22) Date of filing: 19.12.2002
(51) Int. Cl.: G06F 9/445

(54) **Method of initializing multiple devices and a control system for controlling multiple devices**
Verfahren zur Initialisierung von mehreren Geräten und ein Steuerungssystem zur Steuerung von mehreren Geräten
Méthode d'initialisation de plusieurs dispositifs et un système de commande pour commander plusieurs dispositifs

(30) Priority: 27.12.2001 JP 2001398530
(43) Date of publication of application: 02.07.2003
(73) Proprietor: SEIKO EPSON CORPORATION, Shinjuku-ku Tokyo 163-0811 (JP)
(72) Inventor: Hayashi, Hiroaki, Suwa-shi, Nagano-ken 392-8502 (JP); Sakai, Atsushi, Suwa-shi, Nagano-ken 392-8502 (JP); Sugimoto, Toshiyuki, Suwa-shi, Nagano-ken 392-8502 (JP)
(74) Representative: Hoffmann, Eckart

(56) References cited:
- WO-A-99/34287
- US-A- 5 546 595
- US-A- 5 974 284
- US-A1- 2001 014 921
- "JAVA FOR RETAIL POS PROGRAMMING GUIDE V 1.6" INTRODUCTION AND ARCHITECTURE, [Online] 15 July 2001 (2001-07-15), XP002305280 Retrieved from the Internet: URL:http://www.javapos.com/downloads/JPOS_ Version_1_6.pdf> [retrieved on 2004-11-12]

## Description

The present invention relates to a method of initializing individual devices in a control system that controls multiple devices, to a program for executing this method on a computer, and to a data storage medium for carrying this program. The invention also relates to a control system suitable to control the multiple devices after the devices are appropriately initialized.

WO 99/34287 discloses a method for initializing computing tasks to be performed by one or more processors in a computing system. The method includes the steps of: configuring memory units associated with the processors as specified by memory map definition data; creating operating system message queues as specified by message queue definition data; creating operating system semaphores as specified by semaphore definition data; creating each of the computing tasks as specified by task definition data; initializing each of the computing tasks; signaling completion of the initializing step for each of the computing tasks; and broadcasting a message to indicate completion of all initializing steps associated with the computing tasks. An initialization control program includes a common initialization object for creating, initializing and synchronizing the computing tasks, and a hardware-specific initialization object for providing definition data to the common initialization object, wherein the definition data is associated with the common operating system and the computing tasks to be performed by the computing system.

Programs written in the object-oriented programming language Java® run on a Java Virtual Machine (JVM). Java applications can therefore be used on all operating systems (OS) that support the JVM, regardless of the type or version of the OS. A software application to be used on multiple operating systems, therefore, does not need to be separately developed for each different OS, and application development is thus more cost-effective. Furthermore, because a common software application can be provided for different operating systems, users have access to a wider selection of software and can continue to use existing software even after upgrading the OS.

POS systems such as used at the cash register in retail stores are configured by connecting a printer, a cash drawer, and other peripheral devices to a host computer such as a personal computer. The functions of a POS system are achieved by running on the host computer an application program to control the peripheral devices. If the application program run by the host computer in this type of POS system was written in Java, new POS systems can be easily configured using existing hardware. Moreover, software development costs can be reduced so that the financial burden (cost) to the user is less.

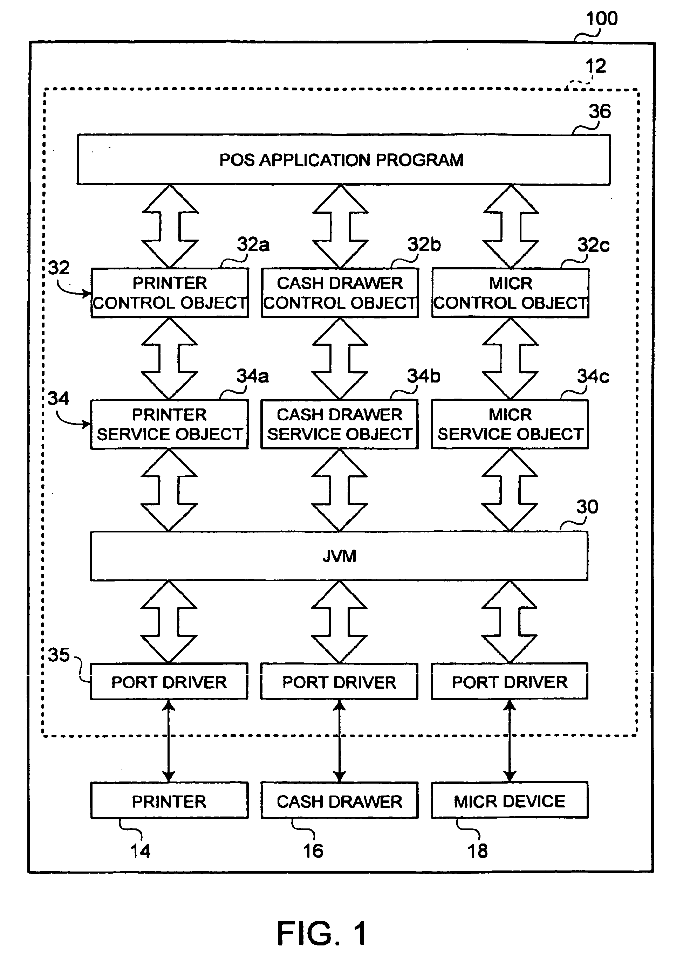

Fig. 1 is a system diagram of a POS system 100 built with a Java application (referred to below as a JavaPOS system). As shown in Fig. 1 this JavaPOS system 100 has devices such as a printer 14, a cash drawer 16, and an MICR device 18 connected to a host computer 12 (MICR = Magnetic Ink Character Recognition). The JavaPOS system 100 is capable of processing checks, and the MICR device 18 executes an MICR process to read information printed as magnetic ink characters on the front of the check.

The OS of the host computer 12 supports the JVM 30. The JVM 30 has a device control object (DCO) 32 for each device category (for each type of device such as printer, cash drawer, and MICR device), and a device service class for each device model. The control objects 32 are provided as part of the system for each device category, and the service classes are supplied by the device manufacturer for each device model. Device service objects (DSO 43) are derived from the respective device service classes as will be explained below. To distinguish the control objects 32 and service objects 34 provided for the printer 14, cash drawer 16, and MICR device 18 from one another, these are referenced below as the printer DCO 32a, cash drawer DCO 32b, MICR DCO 32c, and the printer DSO 34a, cash drawer DSO 34b, and MICR DSO 34c.

An application program (POS application) 36 for achieving POS system functionality by controlling device input and output runs on the JVM 30. In order to use the printer 14, for example, the POS application 36 first declares using the printer 14, and then creates an instance of the printer device class to obtain the DSO 34 for printer 14. When the POS application 36 then issues a print command, the print data is passed to the printer DCO 32a, and the printer DCO 32a invokes the printer DSO 34a. The printer DSO 34a then sends the print data through the port driver 35 to the printer 14, and the printing process runs. The print routines can therefore be written, when the POS application 36 is written, without being aware of the model of printer 14. The DSO 34 thus absorbs differences between device models, and functions as a building block in making a device-independent POS application 36.

The general procedure in a JavaPOS system 100 as described above, when the power for an individual device is turned on, is to initialize the device by the DSO 34 provided for that device model. In other words, each DSO 34 includes an initialization routine for executing this initialization process, and when a particular device is turned on the initialization routine of the corresponding DSO 34 runs. In the initialization process the host computer 12 queries each device for the device model and functions, for example, and sets each device to a particular state.

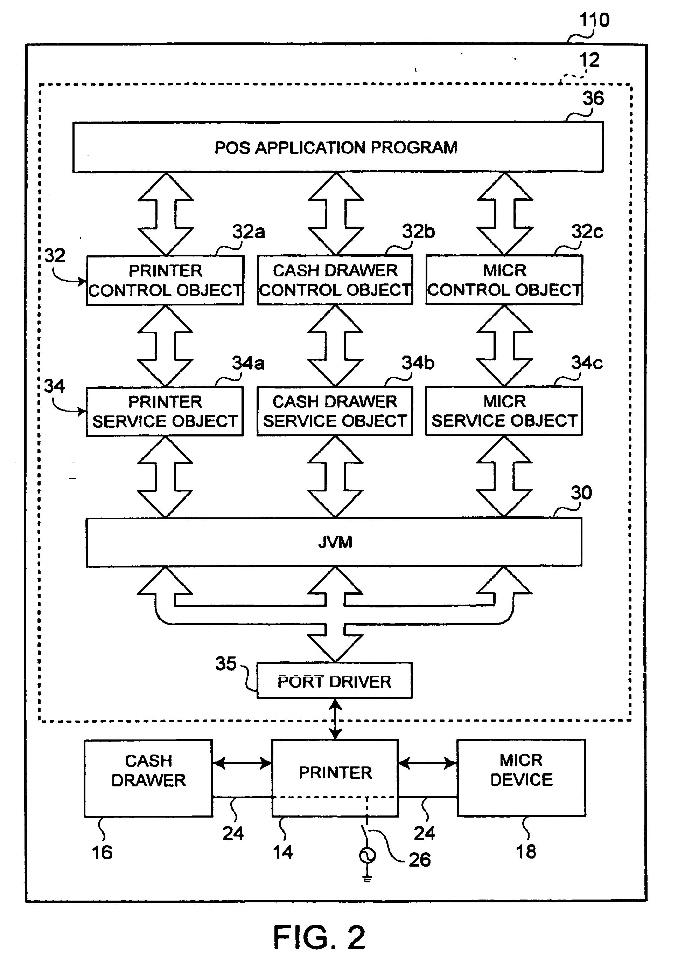

In general, however, a POS system has a specific main device (often the printer) with the other devices connected to the main device. Fig. 2 is a system diagram showing the configuration of such a JavaPOS system 110. Power is supplied from the main device to the other devices in this control system configuration. If the printer 14 is the main device of the JavaPOS system 110 as shown in Fig. 2, for example, power is supplied from the printer 14 to the cash drawer 16 and MICR device 18. When power to the printer 14 is turned on, the power supply to the other devices connected to the printer 14 is automatically switched on at the same time. In other words, power is turned on simultaneously for multiple devices. The initialization processes for the devices are therefore executed simultaneously in parallel by the respective DSOs 34 when the devices are turned on.

However, the initialization process run by each DSO 34 runs without synchronizing with any other DSO 34 (that is, without consideration for whatever processes another DSO 34 may be running). As a result, if, while one DSO 34 is running an initialization process, the host computer 12 returns a reply to the initialization process run by another DSO 34, each DSO 34 running an initialization process is unable to determine if the host is responding to its own initialization process or to the initialization process of another DSO 34, and the initialization processes may not run correctly.

For example, if the MICR DSO 34c requests the ROM version of the MICR device 18 during the initialization process and at substantially the same time the printer DSO 34a requests the model of the printer 14, responses to these requests are returned to both MICR DSO 34c and printer DSO 34a. The MICR DSO 34c and printer DSO 34a are thus unable to determine whether the returned reply contains the ROM version of the MICR device 18 or the model of printer 14.

The present invention aims at solving this problem, and an object of the invention is to enable initialization processes to run appropriately in response to initialization requests for multiple devices.

This object is achieved with a method as claimed in claim 1, a control system as claimed in claim 8 and a program as claimed in claim 11. Preferred embodiments of the invention are subject-matter of the dependent claims.

The method of this invention runs a common initialization process for initialization requests received for multiple devices. Operating problems arising from incorrect initialization due to unsynchronized initialization of multiple devices when a separate initialization process is run in response each initialization request can thus be prevented. The present invention can thus properly initialize multiple devices even when simultaneous initialization requests are received from the devices.

It should be noted that an initialization process as used herein means any process that must be run first to enable normal device control, including, for example, getting the model, function, or status of the device, or setting specific device states.

The control system is preferably constructed from a computer system able to run programs written in an object-oriented programming language. The initialization request receiving step thus receives a device initialization request from objects corresponding to each of the multiple devices, and the completion report transmission step sends the completion report to each object that sent an initialization request.

Other objects and attainments together with a fuller understanding of the invention will become apparent and appreciated by referring to the following description of preferred embodiments taken in conjunction with the accompanying drawings.
- Fig. 1: is a system diagram of a JavaPOS system;
- Fig. 2: is a system diagram of a conventional JavaPOS system;
- Fig. 3: is a system diagram of a JavaPOS system according to a preferred embodiment of the invention;
- Fig. 4: is a block diagram of a printer;
- Fig. 5: shows an exemplary status data configuration;
- Fig. 6: shows the configuration of command parameters in an ASB function setup command;
- Fig. 7: is a schematic diagram of processes run when the power is turned on for each device in a JavaPOS system according to a preferred embodiment of the invention; and
- Fig. 8: is a flow chart of an initialization process run by the initialization object of the invention.

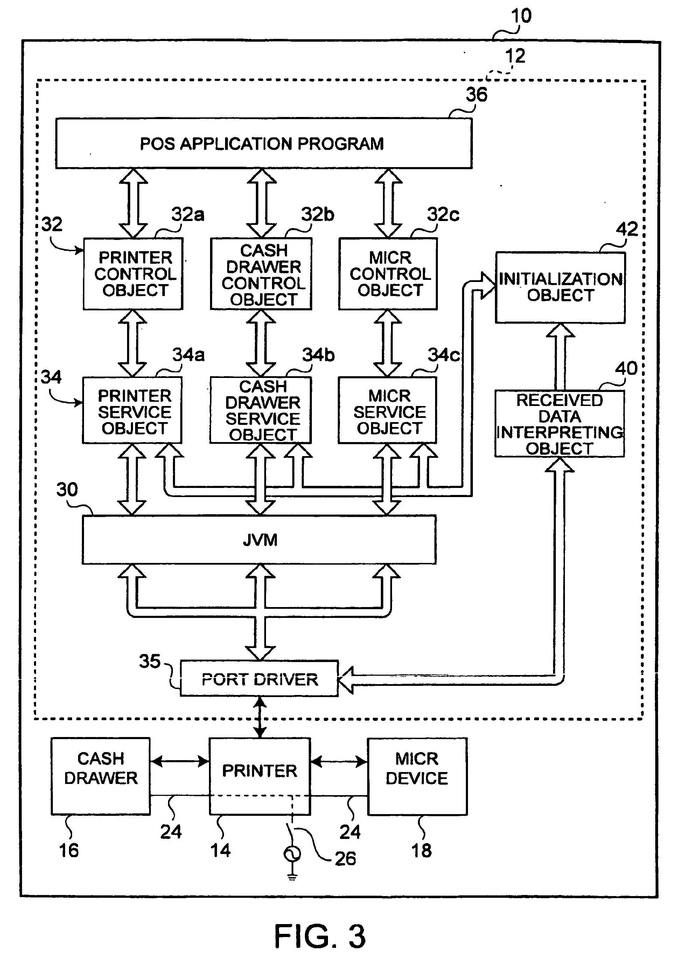

Fig. 3 is a system configuration diagram of a JavaPOS system 10 according to a preferred embodiment of the invention. It should be noted that like parts are denoted by like reference numerals in Fig. 3, Fig. 1 and Fig. 2. As shown in Fig. 3, this JavaPOS system 10 includes a host computer 12, a printer 14, a cash drawer 16, and an MICR device 18. The printer 14 is connected directly to the host computer 12. The cash drawer 16 and the MICR device 18 are connected through the printer 14 to the host computer 12. As also shown in the figure, the power supply lines 24 to the cash drawer 16 and the MICR device 18 are connected to the printer 14; when the power supply switch 26 of the printer 14 is turned on power is supplied simultaneously to each of the other devices.

As in the JavaPOS system 100 shown in Fig. 1, the OS of the host computer 12 in JavaPOS system 10 supports the JVM 30, and a device service class is provided for each device category and device control objects DCO 32 are provided for each device model in the JVM 30. A POS application 36 for controlling device input and output and thereby achieving the functionality of a POS system also runs under the JVM 30. Additionally provided in the JavaPOS system 10 according to this embodiment of the invention are a received data interpreting class and an initialization class. Note that the received data interpreting class is represented in the Figures by a received data interpreting object 40 as an instance of the class. Similarly, and the initialization class is represented by an initialization object 42 as an instance of the class.

The received data interpreting object 40 (referred to as RDI object hereinafter) functions to interpret response signals from the printer 14 and pass each signal to the appropriate object.

The initialization object 42 gathers initialization requests from each DSO 34 and runs the initialization processes.

DCO 32, DSO 34, POS application 36, RDI object 40, and initialization object 42 in this preferred embodiment of the invention (or the associated classes, respectively) are programs written in the Java programming language and stored in ROM, on a hard disk, or other storage device accessible by the host computer 12.

As further described below, commands are sent from the initialization object 42 to the printer 14 and responses are received from the printer 14 in the initialization process. Before further describing the initialization process, an exemplary configuration of printer 14 is described next below.

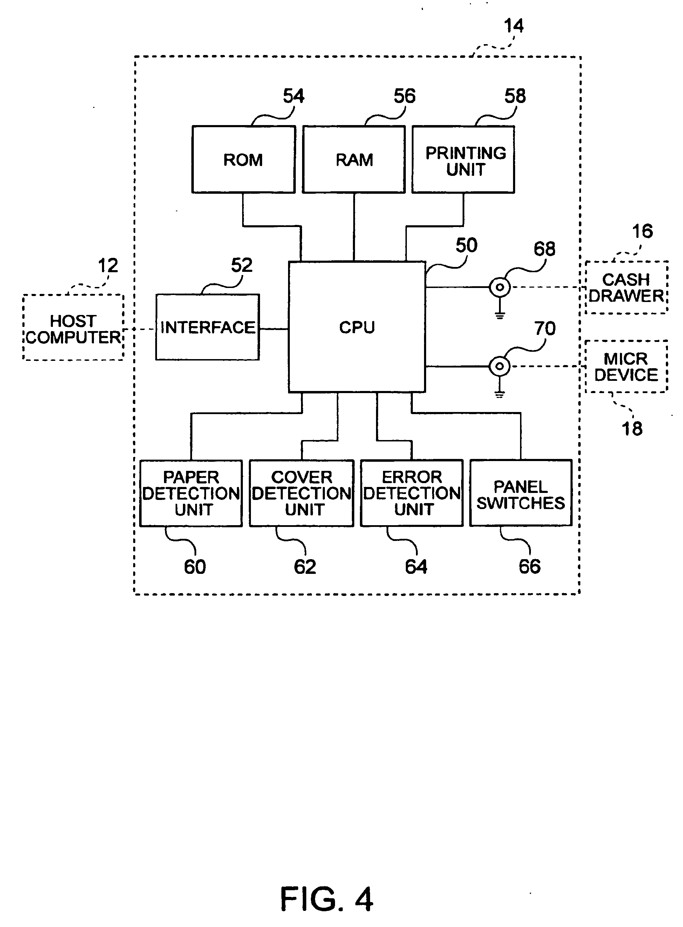

Fig. 4 is a block diagram of an example of printer 14. As shown in Fig. 4 the printer 14 has a CPU 50. The CPU 50 is connected to host computer 12 through interface 52. Connected to the CPU 50 are ROM 54, RAM 56, printing unit 58, paper detection unit 60, cover detection unit 62, error detection unit 64, panel switches 66, and connectors 68 and 70.

A control program and print character patterns for the printer 14, and a control program and data for the MICR device 18, are stored in ROM 54. ROM 54 is therefore used by both the printer 14 and MICR device 18. A receive buffer for storing commands and print data received from the host computer 12 is provided in RAM 56.

The printing unit 58 has a print head, motors for driving the print head, and related control devices, and operates to print according to commands from the CPU 50.

The paper detection unit 60 has sensors for detecting the position of the recording medium, such as slip forms and roll paper, inside the printer, and reports the detection results to the CPU 50.

The cover detection unit 62 has a sensor for detecting whether the printer cover is open or closed, and reports the open/closed cover state to the CPU 50.

The error detection unit 64 has sensors for detecting whether or not the print head is at its home position, for detecting the position of an automatic paper cutter , for detecting errors such as paper jams, etc.. The detection results of these sensors are reported to the CPU 50.

The cash drawer 16 and the MICR device 18 are connected to connectors 68 and 70, respectively, and CPU 50 detects whether the cash drawer 16 is open or closed based on the voltage level at a predetermined terminal of the connector 68.

If the CPU 50 determines that the printer cover is open, there is no paper (slip form or roll paper) in the printer, or detects an error, it takes the printer 14 off-line.

The printer 14 also has an automatic status reporting function, referred to herein as an ASB function (ASB = Auto Status Back). The ASB function automatically reports the current printer status to the host computer 12 whenever a change occurs in the status of the printer 14. Printer states reported by the ASB function in this example of printer 14 are (1) the open/closed status of the cash drawer 16, (2) printer on-line/off-line status, (3) error status, (4) roll paper detector state, (5) slip form detector state and slip form status, and (6) the state of operating panel switches.

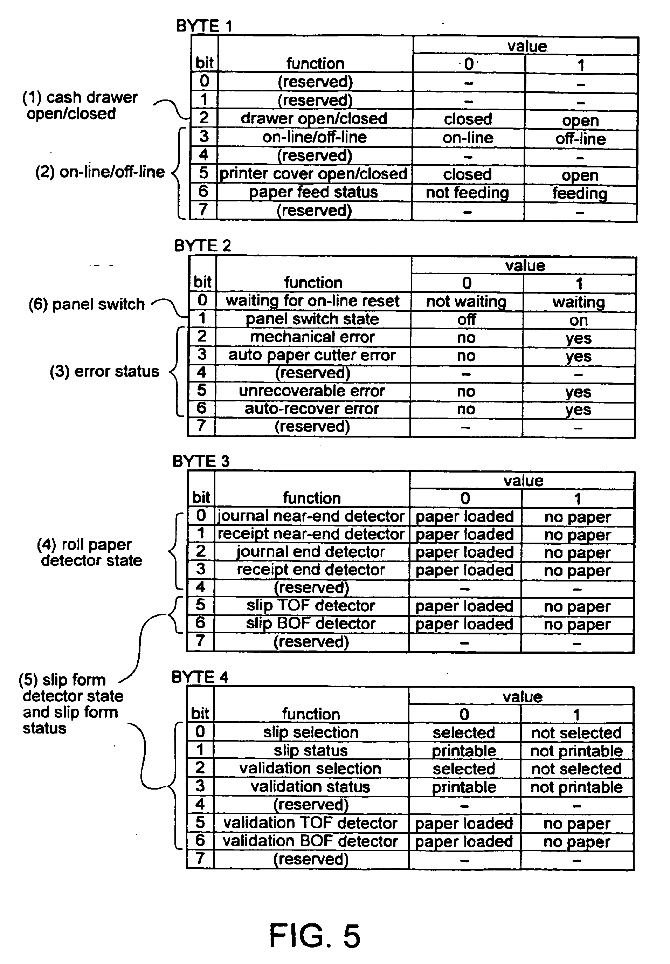

Fig. 5 shows an exemplary status data configuration. In this example the status data is 4-bytes long, and each of the above states (1) to (6) is represented by the setting of one or more bits. The CPU 50 detects each status based on the output from paper detection unit 60, cover detection unit 62, error detection unit 64, and panel switches 66, and the voltage level at the predetermined terminal of the connector 68, and sets the corresponding status bits to 1 or 0 accordingly.

When power to the printer 14 is turned on the ASB function is disabled. The ASB function may be enabled by the host computer 12 sending an ASB function setup command to the printer 14. The ASB function setup command contains one byte (8 bits) of command data. The ASB function can be set to an enabled or disabled state for each of the above states (1) to (6) based on the values of these command parameters.

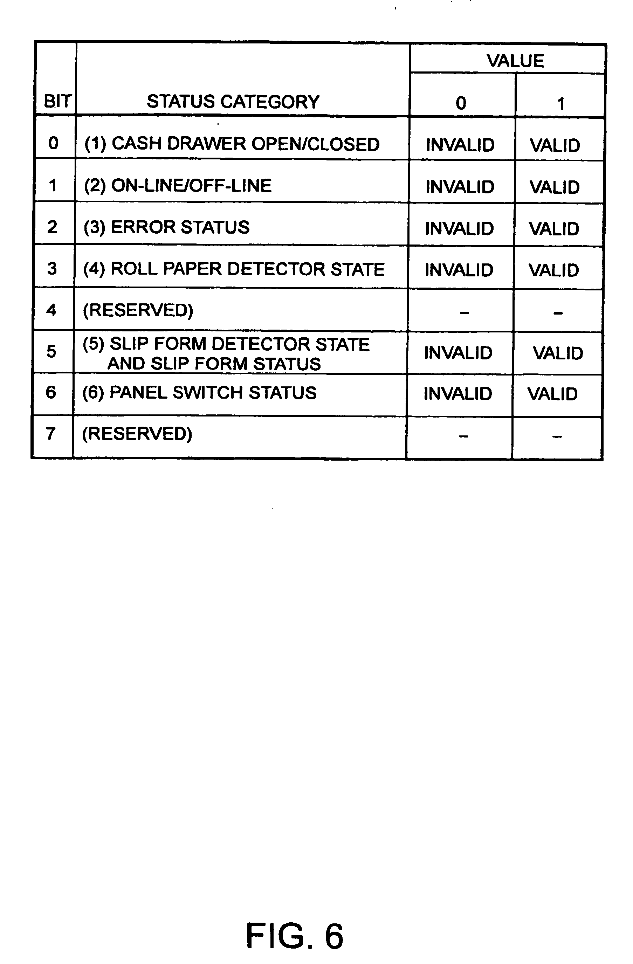

Fig. 6 shows the configuration of the command parameters. As shown in the figure, each status category corresponds to one command parameter bit, and the ASB function is enabled for each status category for which the parameter bit is 1.

When the CPU 50 receives an ASB function setup command from the host computer 12, it reports the current status data to the host computer 12 if the ASB function is enabled for any of the status categories by the corresponding command parameter. Thereafter, each time a status contained in a status category for which the ASB function is enabled changes, the CPU 50 sends the status data to the host computer 12.

As described above, the POS application 36 running on the host computer 12 declares using the printer 14 whenever it starts to use the printer 14, and then creates an instance of the printer device service class, namely the DSO 34a, according to this declaration. When the POS application 36 then issues a print command, print data is passed to the printer DCO 32a, and a printing process runs as a result of this printer DCO 32a calling the printer DSO 34a.

When the printer DSO 34a is created it generates character attribute command data. Each time the POS application 36 sets print character attributes (such as the font, type size, color, and styles) for the printer 14, the character attribute command data are changed in accordance with these print character attributes. The character attribute command data thus always represent information relating to the current character attribute settings of the printer 14. As is further described below, the character attribute command data is passed to the initialization object 42 when initialization is requested when the printer DSO 34a is created, and is used during the initialization process to restore the character attributes of the printer 14 to the settings used before power to the printer was turned off.

The initialization process run by the initialization object 42 is described next.

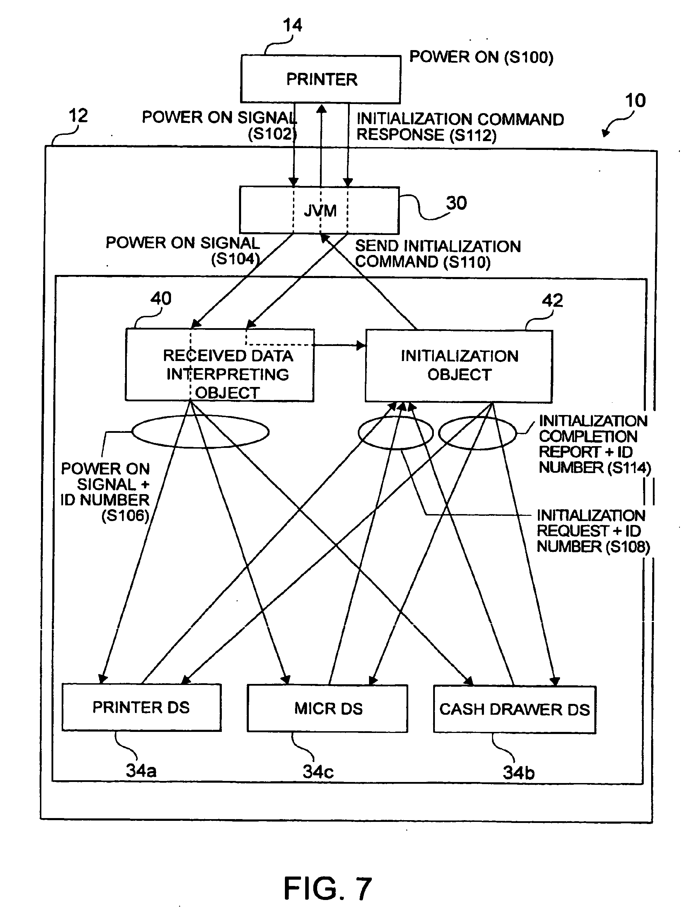

Fig. 7 outlines the process run in the JavaPOS system 10 according to this embodiment of the invention when the power supply switch 26 is turned on (that is, when power is supplied simultaneously to the printer 14, the cash drawer 16, and the MICR device 18). As shown in the figure, when the power supply switch 26 is turned on (S100) a power-on signal is sent to the JVM 30 on host computer 12 (S102), and is passed from the JVM 30 to the RDI object 40 (S104). The RDI object 40 generates a new ID number (a value of 1 or more) not already generated and in use according to a specific rule, such as sequentially from 1 or randomly, adds this ID number to the power-on signal, and passes it to each instance of DSO 34 already created (S106).

When the DSOs 34 receive the power on-signal and the ID number, each sends an initialization request containing the ID number to the initialization object 42 (S108). This causes the initialization object 42 to run an initialization process whereby initialization commands are sent to the printer 14 (S110) and corresponding command responses are received (S112) as described in further detail below. Responses from the printer 14 are received through the RDI object 40. More specifically, the RDI object 40 interprets data sent from the printer 14, determines whether the data is a response to an initialization command, and passes responses to initialization commands to the initialization object 42.

Each DSO 34 issues, when it runs for the first time after having been created as an instance of the corresponding class, a first initialization request to the initialization object 42. A first initialization process is executed in response to this first initialization request. It is to be understood that this first initialization is executed when the power to the devices 14, 16 and 18 is turned on for the first time after the POS application program started. If, after that and while the POS application program is still running, the devices are switched off and then on again, another initialization process is executed each time. Each of these other initialization processes will be referred to as a power-on initialization hereinafter to distinguish it from the first initialization.

When the DSOs 34 issue the first initialization request to the initialization object 42 they set the ID number to 0. In contrast to that, the RDI object 40 sets the ID number to a value of 1 or more for each subsequent power-on initialization process. The first initialization process executed in response to the first initialization request by the printer DSO 34a passes character attribute command data from the printer DSO 34a to the initialization object 42.

The DSOs 34 also prohibit all processes transmitting data to the devices from the time when the power-on signal is detected in step S106 until the time when an initialization completion report is received in step S114 (described below). This prevents sending data other than initialization data during the initialization process run by the initialization object 42 to any device that has not completed initialization.

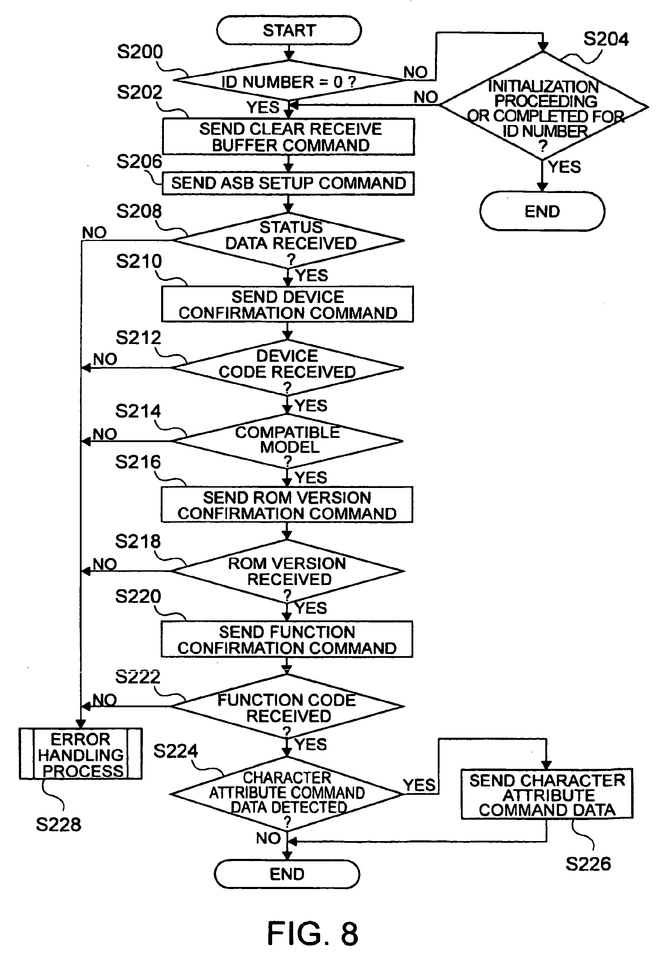

Fig. 8 is a flow chart of the initialization process run by the initialization class.

This process starts (S200) by detecting if the ID number added to the initialization request is 0. If the ID number from a DSO 34 is 0 this is the first initialization request issued by an instance (DSO) of the device service class after the instance has been created, and the procedure continues with step S202. However, if the ID number in step S200 is not 0, the initialization request is known to be a power-on initialization request. Whether an initialization process has already been completed for the same ID number or whether it is still running is then determined (S204). If the initialization process has already been completed or is running, a new initialization process should not run and processing ends. Furthermore, if an initialization process has not been completed for the same ID number and is not running in step S204, operation continues from step S202.

Steps S200 and S204 thus prevent overlapping (conflicting) initialization processes for initialization requests containing the same ID number (that is, initialization requests for devices for which the power was turned on simultaneously), while also enabling an initialization process to be run for each initialization request asserted when a DSO 34 instance runs for the first time.

A receive buffer clear command is then sent to the printer 14 in step S202. When the printer's CPU 50 receives a receive buffer clear command, it clears the receive buffer in RAM 56.

An ASB function setup command with the command parameter "FF" (all bits set to 1) is then sent to the printer 14 (S206). When the CPU 50 receives this ASB function setup command it enables the ASB function for all monitored statuses, and sends the current status data to the host computer 12.

Whether status data was received from the printer 14 in response to the ASB function setup command is then determined (S208). If status data was received, step S210 runs.

A device confirmation command is then sent in step S210. When the CPU 50 receives the device confirmation command it returns a device code indicating the printer's model to the host computer 12.

Whether a device code was received from the printer 14 is then determined (S212). If a device code was received, the printer 14 model indicated by the device code is checked for compatibility with the JavaPOS system 10 (S214). If the printer 14 is a compatible model, control steps to S216.

A ROM version confirmation command is then sent to the printer 14 (S216). When the CPU 50 receives the ROM version confirmation command it retrieves and sends the version number of ROM 54 to host computer 12.

Whether the ROM version number was received from the printer 14 is then determined (S218). If it was received, control moves to step S220.

A function confirmation command is then sent to the printer 14 (S220). When the CPU 50 receives the function confirmation command it returns a function code indicating the printer's functions (such as whether the printer has an automatic paper cutter, an endorsement printing head, and Japanese language capability) to the host computer 12.

Whether the function code was received from the printer 14 is then determined (S222). If the function code was received, whether character attribute command data is present (that is, whether the printer DSO 34a has already been created) is detected (S224). If character attribute command data is not detected, the initialization process of initialization object 42 ends. If character attribute command data is detected (step S224 returns yes), a set character attribute command for setting the character attributes in accordance with the character attribute command data is sent to the printer 14 (S226), and the initialization process of the initialization object 42 ends. By thus sending this set character attribute command in step S226 the character attributes of the printer 14 can be restored to the same attributes used before the printer was turned off. If the character attribute command data is not present (meaning that a printer DSO 34a has not been created for the printer 14), the set character attribute command is not set and the initialization process is faster.

If a response from the printer 14 is not detected in step S208, S212, S218, or S222, or if the printer 14 is determined to not be a compatible model in step S214, an error handling process runs in step S228.

If the ID number is a value other than 0, this error handling process retries initialization by repeating the initialization process from step S200. If the ID number is 0, the error handling process returns an error to the DSO 34 that issued the initialization request.

When the initialization object 42 completes the initialization process shown in Fig. 8, it sends the ID number included in the initialization request together with an initialization completion report to each DSO 34 in step S114 (Fig. 7), and each DSO 34 receiving the initialization completion report queries the initialization object 42 for information relating to the respective device. The initialization object 42 sends the information requested by each DSO 34 from the information (status data, ROM version, printer 14 device code and function code) received from the printer 14 to the respective DSO 34. The DSO 34 thus gets information relating to the respective device and can thereafter appropriately control that device.

As described above, when initialization requests are received from multiple device service objects DSO 34, the initialization object 42 of this embodiment of the invention gathers all initialization requests and executes a single initialization process. As a result, when multiple initialization requests are issued when the power is turned on, each device can be properly initialized without an individual initialization process being run for each DSO 34. In other words, whereas the prior art initialization processes did not execute correctly due to a lack of synchronization between initialization processes when an individual initialization process was run for each DSO 34 as described above, the method of the present invention runs a common initialization process for the multiple initialization processes and thereby prevents this problem of the prior art.

Furthermore, an ID number is added to the initialization request from each DSO 34, and the ID number is set to the same value in the initialization requests from devices that turned on at the same time. Therefore, even if the initialization requests are sent at different times from the DSOs 34 of the devices that turned simultaneously, a common initialization process runs only once for each of the devices, and the likelihood that the initialization process runs normally is thus increased.

Furthermore, because each time the devices are switched on, the ID number is set to a new value not previously used, the initialization process will run normally each time the power is turned on even if the power is turned on and off repeatedly.

It should be noted that while a printer 14, a cash drawer 16, and an MICR device 18 are shown as exemplary devices connected to the host computer 12 in the above embodiment, the invention is not limited to these and other devices such as an image scanner could be connected.

Furthermore, the invention is described using a POS system by way of example, but the invention is not limited to this particular application and can be widely applied for device initialization in control systems controlling multiple devices.

## Claims

1. A method of initializing multiple devices (14, 16, 18) of a control system for controlling multiple devices, wherein the control system comprises a computer system capable of executing programs written in an object-oriented programming language and each of the multiple devices (14, 16, 18) has a respective object (34a-34c) associated therewith, the object issuing an initialization request to initialize the corresponding device, comprising:
(a) receiving a respective initialization request for each device;
(b) running a common initialization process for multiple initialization requests received in step (a); and
(c) issuing an initialization process completion report after the common initialization process ends and sending the completion report to each object (34a-34c) from which an initialization request was received in step (a), wherein:
each object (34a-34c) issues a first kind of initialization requestin response to power to the corresponding device (14, 16, 18) being turned on;
the first kind of initialization requests received in step (a) contain an initialization request ID that takes the same value for all devices (14, 16, 18) that were turned on simultaneously; and
step (b) runs said common initialization process for all initialization requests that have the same initialization request ID.

2. The method of claim 1, wherein:
each object (34a-34c) issues a second kind of initialization request in response to an event other than that power to the corresponding device (14, 16, 18) is being turned on;
a specific initialization request ID different from that assigned to the first kind of initialization requests is assigned to said second kind of initialization request; and
a separate initialization process being executed for initialization requests having assigned thereto the specific initialization request ID

3. The method of claim 1 or 2, wherein at least one of the multiple devices (14, 16, 18) is a printer (14); wherein a character attribute setting process for setting print character attributes in the printer is executed as part of said common and/or a separate initialization process.

4. The method of claim 3, further comprising:
generating character attribute data for storing the print character attribute settings of the printer (14); wherein the character attribute setting process sets the print character attributes of the printer based in accordance with the character attribute data.

5. The method of claim 4, wherein the character attribute data is generated when the object (34a) associated with the printer (14) is activated.

6. The method of any one of claims 1 to 5, wherein data transmission from each respective object (34a-34c) to the associated device (14, 16, 18) is prohibited after the respective object issued an initialization request until the initialization completion report is received.

7. The method of any one of claims 1 to 6, wherein the object-oriented programming language is Java.

8. A control system for controlling multiple devices (14, 16, 18), comprising:
a computer system capable of running programs written in an object-oriented programming language wherein each of the multiple devices (14, 16, 18) has a respective first object (34a-34c) associated therewith, the object issuing an initialization request to initialize the corresponding device;
initialization request receiving means (42) for receiving a respective initialization request for each device;
initialization means (42) for running a common initialization process for initialization requests received by the initialization request receiving means (42) for multiple devices (14, 16, 18); and
completion report transmission means (42) for issuing an initialization process completion report after the common initialization process ends and for sending the completion report to each first object (34a-34c) from which the initialization request receiving means (42) received an initialization request, wherein:
each object (34a-34c) is responsive to power to the corresponding device (14, 16, 18) being turned on to issue a first kind of initialization request;
the first kind of initialization requests contain an initialization request ID that takes the same value for all devices (14, 16, 18) that were turned on simultaneously; and
said initialization means (42) is adapted to run the common initialization process for all initialization requests that have the same initialization request ID.

9. The system of claim 8, comprising a second object (42) for initialization processing, the second object comprising said initialization request receiving means, initialization means, and completion report transmission means.

10. The system of claim 9, wherein the multiple devices (14, 16, 18) are configured so that when the power is turned on for one device (14) the power is also turned on for the other devices (16, 18);
the control system has a third object (40) responsive to a signal that indicates power has been turned on for the one device, for informing the first objects that power has been turned on for each device; and
the first objects are adapted to send an initialization request to the second object (42), as said first kind of initialization request, in response to the information from the third object (40).

11. A program of instructions for execution by a computer to perform the method as defined in claim 1 or 2, the program being written in an object-oriented programming language.

12. A recording medium carrying the program of claim 11.

## Patentansprüche

1. Verfahren der Initialisierung mehrerer Geräte (14, 16, 18) eines Steuersystems zum Steuern mehrerer Geräte, bei dem das Steuersystem ein Computersystem aufweist, welches geeignet ist, Programme auszuführen, die in einer objektorientierten Programmiersprache geschrieben sind, und bei dem jedem der mehreren Geräte (14, 16, 18) ein jeweiliges Objekt (34a-34c) zugehörig ist, welches eine Initialisierungsanforderung ausgibt, um das entsprechende Gerät zu initialisieren, aufweisend:
(a) Empfangen einer jeweiligen Initialisierungsanforderung für jedes Gerät;
(b) Ausführen eines gemeinsamen Initialisierungsprozesses für mehrere, im Schritt (a) empfangene Initialisierungsanforderungen; und
(c) Ausgeben eines Initialisierungsprozeß-Vollendungsberichts nach Beendigung des gemeinsamen Initialisierungsprozesses und Senden des Vollendungsberichts an jedes Objekt (34a-34c), von dem im Schritt (a) eine Initialisierungsanforderung empfangen wurde, wobei:
jedes Objekt (34a-34c) eine erste Art von Initialisierungsanforderung als Reaktion auf das Stromeinschalten des entsprechenden Geräts (14, 16, 18) ausgibt;
die im Schritt (a) empfangene erste Art von Initialisierungsanforderungen eine Initialisierungsanforderungs-ID enthält, welche für alle Geräte (14, 16, 18), die gleichzeitig eingeschaltet wurden, den gleichen Wert annimmt; und
der Schritt (b) den gemeinsamen Initialisierungsprozeß für alle Initialisierungsanforderungen ausführt, die die gleiche lnitialisierungsanforderungs-ID haben.

2. Verfahren nach Anspruch 1, bei dem
jedes Objekt (34a-34c) eine zweite Art von Initialisierungsanforderung als Reaktion auf ein anderes Ereignis ausgibt, als das Einschalten von Strom für das entsprechende Gerät (14, 16, 18);
eine spezifische Initialisierungsanforderungs-ID, die sich von der der ersten Art von Initialisierungsanforderungen zugeteilten ID unterscheidet, der zweiten Art von Initialisierungsanforderung zugeteilt wird; und
- ein gesonderter Initialisierungsprozeß für Initialisierungsanforderungen ausgeführt wird, denen die spezifische Initialisierungsanforderungs-ID zugeordnet ist.

3. Verfahren nach Anspruch 1 oder 2, bei dem mindestens eines der mehreren Geräte (14, 16, 18) ein Drucker (14) ist, wobei als Teil des gemeinsamen und/oder eines gesonderten Initialisierungsprozesses ein Zeichenattribut-Einstellprozeß zum Einstellen von Druckzeichenattributen im Drucker ausgeführt wird.

4. Verfahren nach Anspruch 3, ferner aufweisend:
das Erzeugen von Zeichenattributdaten zum Speichern von Druckzeichenattributeinstellungen des Druckers (14), wobei der Zeichenattributeinstellprozeß die Druckzeichenattribute des Druckers auf der Grundlage in Übereinstimmung mit den Zeichenattributdaten setzt.

5. Verfahren nach Anspruch 4, bei dem die Zeichenattributdaten generiert werden, wenn das dem Drucker (14) zugehörige Objekt (34a) aktiviert wird.

6. Verfahren nach einem der Ansprüche 1 bis 5, bei dem die Datenübermittlung von jedem jeweiligen Objekt (34a-34c) an das zugehörige Gerät (14, 16, 18) unterbunden wird, nachdem das jeweilige Objekt eine Initialisierungsanforderung ausstellte, bis der Initialisierungsvollendungsbericht empfangen wird.

7. Verfahren nach einem der Ansprüche 1 bis 6, bei dem die objektorientierte Programmiersprache Java ist.

8. Steuersystem zum Steuern von mehreren Geräten (14, 16, 18), aufweisend:
ein Computersystem, welches beschaffen ist, Programme auszuführen, die in einer objektorientierten Programmiersprache geschrieben sind, wobei jedem der mehreren Geräte (14, 16, 18) ein jeweiliges erstes Objekt (34a-34c) zugehörig ist, welches eine Initialisierungsanforderung zum Initialisieren des entsprechenden Geräts ausgibt;
eine Initialisierungsanforderungs-Empfangseinrichtung (42), die eine jeweilige Initialisierungsanforderung für jedes Gerät empfängt;
eine Initialisierungseinrichtung (42), die einen gemeinsamen lnitialisierungsprozeß für Initialisierungsanforderungen ausführt, die von der Initialisierungsanforderungs-Empfangseinrichtung (42) für mehrere Geräte (14, 16, 18) empfangen wurden; und
eine Vollendungsbericht-Übertragungseinrichtung (42) zur Ausgabe eines Initialisierungsprozeß-Vollendungsberichts nach der Beendigung des gemeinsamen Initialisierungsprozesses und zum Senden des Vollendungsberichts an jedes erste Objekt (34a-34c), von dem die Initialisierungsanforderungs-Empfangseinrichtung (42) eine Initialisierungsanforderung erhielt, wobei
jedes Objekt (34a-34c) auf das Einschalten von Strom für das entsprechende Gerät (14, 16, 18) anspricht, um eine erste Art von Initialisierungsanforderung auszugeben;
die erste Art von Initialisierungsanforderungen eine Initialisierungsanforderungs-ID enthält, welche für alle Geräte (14, 16, 18), die gleichzeitig eingeschaltet wurden, den gleichen Wert annimmt; und
die Initialisierungseinrichtung (42) beschaffen ist, den gemeinsamen Initialisierungsprozeß für alle Initialisierungsanforderungen, welche die gleiche Initialisierungsanforderungs-ID haben, auszuführen.

9. System nach Anspruch 8, mit einem zweiten Objekt (42) für die Initialisierungsverarbeitung, wobei das zweite Objekt die Initialisierungsanforderungs-Empfangseinrichtung, Initialisierungseinrichtung, und Vollendungsbericht-Übertragungseinrichtung aufweist.

10. System nach Anspruch 9, bei dem die mehreren Geräte (14, 16, 18) so gestaltet sind, daß beim Einschalten von Strom für ein Gerät (14) auch der Strom für die anderen Geräte (16, 18) eingeschaltet wird;
das Steuersystem ein drittes Objekt (40) hat, welches auf ein Signal anspricht, welches anzeigt, daß Strom für das eine Gerät eingeschaltet wurde, um die ersten Objekte zu informieren, daß Strom für die einzelnen Geräte eingeschaltet wurde; und die ersten Objekte beschaffen sind, als die erste Art der Initialisierungsanforderung, eine Initialisierungsanforderung an das zweite Objekte (42) als Reaktion auf die Information vom dritten Objekt (40) zu senden.

11. Programm mit Anweisungen zur Ausführung durch einen Computer zum Durchführen des Verfahrens gemäß Anspruch 1 oder 2, wobei das Programm in einer objektorientierten Programmiersprache geschrieben ist.

12. Aufzeichnungsträger mit dem Programm gemäß Anspruch 11.

## Revendications

1. Procédé d'initialisation de multiples dispositifs (14, 16, 18) d'un système de commande pour commander de multiples dispositifs, dans lequel le système de commande comprend un système informatique capable d'exécuter des programmes écrits dans un langage de programmation orienté objets et dans lequel à chacun des multiples dispositifs (14, 16, 18) est associé un objet (34a-34c) respectif, l'objet émettant une demande d'initialisation' pour initialiser le dispositif correspondant, comprenant
(a) la réception d'une 'demande d'initialisation respective pour chaque dispositif ;
(b) l'exécution d'un processus d'initialisation commun pour de multiples demandes d'initialisation reçues lors de l'étape (a) ; et
(c) l'émission d'un rapport d'achèvement de processus d'initialisation après que le processus d'initialisation commun se soit terminé et l'envoi du rapport d'achèvement à chaque objet (34a-34c) dont une demande d'initialisation a été reçue lors de l'étape (a), dans lequel :
chaque objet (34a-34c) envoie un premier type de demande d'initialisation en réponse à la mise sous tension du dispositif (14, 16, 18) correspondant ;
le premier type de demande d'initialisation reçu à l'étape (a) contient un identificateur ID de demande d'initialisation qui prend la même valeur pour tous les dispositifs (14, 16, 18) ayant été mis sous tension simultanément ; et
l'étape (b) exécute ledit processus d'initialisation commun pour toutes les demandes d'initialisation ayant le même ID de demande d'initialisation.

2. Procédé suivant la revendication 1, dans lequel :
chaque objet (34a-34c) envoie un deuxième type de demande d'initialisation en réponse à un événement autre que la mise sous tension du dispositif (14, 16, 18) correspondant ;
un ID de demande d'initialisation spécifique différent de celui affecté au premier type de demande d'initialisation est affecté au deuxième type de demande d'initialisation ; et
un processus d'initialisation distinct étant exécuté pour des demandes d'initialisation auxquelles est affecté l'ID de demande d'initialisation spécifique.

3. Procédé suivant la revendication 1 ou 2, dans lequel au moins l'un des multiples dispositifs (14, 16, 18) est une imprimante (14) ; dans lequel un processus de réglage d'attributs de caractères destiné à régler des attributs de caractères d'impression dans l'imprimante est exécuté en tant que partie du processus d'initialisation commun et/ou d'un processus d'initialisation distinct.

4. Procédé suivant la revendication 3, comprenant en outre :
la production de données d'attributs de caractères pour mémoriser les réglages d'attributs de caractères d'impression de l'imprimante (14) ; dans lequel le processus de réglage d'attributs de caractères règle les attributs de caractères d'impression de l'imprimante en conformité avec les données d'attributs de caractères.

5. Procédé suivant la revendication 4, dans lequel les données d'attributs de caractères sont produites lorsque l'objet (34a) associé à l'imprimante (14) est activé.

6. Procédé suivant l'une quelconque des revendications 1 à 5, dans lequel la transmission de données de chaque objet (34a-34c) respectif au dispositif (14, 16, 18) associé est interdite après que l'objet respectif a envoyé une demande d'initialisation jusqu'à réception du rapport d'achèvement de l'initialisation.

7. Procédé suivant l'une quelconque des revendications 1 à 6, dans lequel le langage de programmation orienté objets est le langage Java.

8. Système de commande pour commander de multiples dispositifs (14, 16, 18) comprenant :
un système informatique capable d'exécuter des programmes écrits dans un langage de programmation orienté objets dans lequel, à chacun des multiples dispositifs (14, 16, 18) est associé un premier objet (34a-34c) respectif, l'objet envoyant une demande d'initialisation pour initialiser le dispositif correspondant ;
un moyen (42) de réception de demande d'initialisation pour recevoir une demande d'initialisation respective pour chaque dispositif ;
un moyen (42) d'initialisation pour exécuter un processus d'initialisation commun pour des demandes d'initialisation reçues par le moyen (42) de réception de demandes d'initialisation pour de multiples dispositifs (14, 16, 18) ; et
un moyen (42) de transmission de rapport d'achèvement pour envoyer un rapport d'achèvement du processus d'initialisation après la fin du processus d'initialisation commun et pour envoyer le rapport d'achèvement à chaque premier objet (34a-34c) dont le moyen (42) de réception de demande d'initialisation a reçu une demande d'initialisation, dans lequel :
chaque objet (34a-34c) est sensible à la mise sous tension du dispositif (14, 16, 18) correspondant pour émettre un premier type de demande d'initialisation ;
le premier type de demande d'initialisation contient un ID de demande d'initialisation qui prend la même valeur pour tous les dispositifs (14, 16, 18) ayant été mis sous tension simultanément ; et
le moyen (42) d'initialisation est apte à exécuter le processus d'initialisation commun pour toutes les demandes d'initialisation ayant le même ID de demande d'initialisation.

9. Système suivant la revendication 8, comprenant un deuxième objet (42) pour le traitement d'initialisation, le deuxième objet comprenant le moyen de réception de demande d'initialisation, un moyen d'initialisation et un moyen de transmission de rapport d'achèvement.

10. Système suivant la revendication 9, dans lequel les multiples dispositifs (14, 16, 18) sont configurés de façon à ce que lorsqu'un dispositif (14) est mis sous tension, les autres dispositifs (16, 18) sont également mis sous tension ;
le système de commande a un troisième objet (40) sensible à un signal qui indique qu'un dispositif a été mis sous tension, pour informer les premiers objets du fait que chaque dispositif a été mis sous tension ; et
les premiers objets sont aptes à envoyer une demande d'initialisation au deuxième objet (42), en tant que premier type de demande d'initialisation, en réponse aux informations provenant du troisième objet (40).

11. Programme d'instructions destinées à être exécutées par un ordinateur pour mettre en oeuvre le procédé suivant la revendication 1 ou 2, le programme étant écrit dans un langage de programmation orienté objets.

12. Support d'enregistrement portant le programme suivant la revendication 11.
